# EUROPEAN PATENT SPECIFICATION

(11) **EP 2 207 252 B1**
(45) Date of publication and mention of the grant of the patent: **03.07.2013**
(21) Application number: 09150130.4
(22) Date of filing: 07.01.2009
(51) Int. Cl.: H02H 7/26, H02J 13/00, G06F 15/167

(54) **Substation automation device and system**
Unterstations-Automatisierungsvorrichtung und -system
Dispositif et système d'automatisation de sous-station

(43) Date of publication of application: 14.07.2010
(73) Proprietor: ABB Research Ltd., 8050 Zürich (CH)
(72) Inventor: Kunsmann, Steven A., Allentown, PA 18104 (US); Tournier, Jean-Charles, 5404 Baden (CH); Werner, Thomas, 5404 Baden (CH)
(74) Representative: ABB Patent Attorneys

(56) References cited:
- US-A1- 2002 052 914
- YI Y H ET AL: "A new-style centralized IED based on IEC 61850" POWER AND ENERGY SOCIETY GENERAL MEETING - CONVERSION AND DELIVERY OF ELECTRICAL ENERGY IN THE 21ST CENTURY, 2008 IEEE, IEEE, PISCATAWAY, NJ, USA, 20 July 2008 (2008-07-20), pages 1-5, XP031304259 ISBN: 978-1-4244-1905-0
- HE LI ET AL: "E-Automation and the Development of Substation Automation Architecture", INTELLIGENT COMPUTATION TECHNOLOGY AND AUTOMATION (ICICTA), 2008 INTERNATIONAL CONFERENCE ON, IEEE, PISCATAWAY, NJ, USA, 20 October 2008 (2008-10-20), pages 1044-1047, XP031354418, ISBN: 978-0-7695-3357-5
- DE MESMAEKER I ET AL: "Protection and Substation Automation Systems: Standardization, Integration and Information Technology", POWER ENGINEERING SOCIETY CONFERENCE AND EXPOSITION IN AFRICA, 2007. POWERAFRICA '07. IEEE, IEEE, PISCATAWAY, NJ, USA, 16 July 2007 (2007-07-16), pages 1-6, XP031246389, ISBN: 978-1-4244-1477-2
- ABB: "MicroSCADA Pro for Substation Automation; Innovation from ABB", , [Online] pages 1-8, XP002502064, Retrieved from the Internet: URL:http://library.abb.com/global/scot/sco t296.nsf/veritydisplay/80176fa1 2a754f03c125714c006fa418/$File/1MRS756064_ en_MicroSCADA_Pro_for_Subst ation_Automation.pdf> [retrieved on 2008-10-24]
- J.D. MCDONALD: 'Substation automation: IED integration and availability of information' IEEE POWER AND ENERGY MAGAZINE vol. 1, no. 2, 01 March 2003, pages 22 - 31, XP055004164 DOI: 10.1109/MPAE.2003.1192023 ISSN: 1540-7977

## Description

### FIELD OF THE INVENTION

The invention relates to the field of Substation Automation for substations of high or medium voltage power transmission networks.

### BACKGROUND OF THE INVENTION

Substations in high and medium-voltage power networks include primary devices such as electrical cables, lines, bus bars, switches, power transformers and instrument transformers, which are generally arranged in switch yards and/or bays. These primary devices are operated in an automated way via a Substation Automation (SA) system. The SA system comprises secondary devices, among which Intelligent Electronic Devices (IED) are responsible for protection, control and monitoring of the primary devices. The secondary devices may be assigned to hierarchical levels, i.e. the station level, the bay level, and the process level, the latter being separated from the bay level by a so-called process interface. IEDs on the station level of the SA system share, at least to a certain extent, the same configuration and/or information about the substation, and include
i) a station PC or supervisory computer on which a Supervisory Control And Data Acquisition (SCADA) software is executed, and comprising an Operator Work Station (OWS) with a local Human-Machine Interface (HMI) for displaying the status of primary equipment (switch position, current/voltages),
ii) a gateway for communication with a Network Control Centre (NCC) or other stations, and for converting protocol information;
iii) an engineering PC comprising an Operator Work Station for modifying or updating the configuration of the station PC, specifically of the HMI and SCADA systems;
iv) a firewall - separating the station bus from other networks, such as corporate network.

The above enumerated station-level tasks, processes or functions are either running on dedicated devices (gateways, firewalls), or on Industrial PCs (Local HMI, Engineering PC). The station level IEDs are connected to a station bus conventionally serving the purpose of exchanging commands and status information among IEDs on the station level and the bay units or protection and/or control IEDs on the bay level. Finally, secondary devices on the process-level comprise sensors for voltage (VT), current (CT) and gas density measurements, contact probes for sensing switch and transformer tap changer positions, and/or actuators (I/O) for changing transformer tap positions, or for controlling switchgear like circuit breakers or disconnectors.

A communication standard for communication between the secondary devices of a substation has been introduced by the International Electrotechnical Committee (IEC) as part of the standard IEC 61850 entitled "communication networks and systems in substations". For non-time critical messages, IEC 61850-8-1 specifies the Manufacturing Message Specification (MMS, ISO/IEC 9506) protocol based on a reduced Open Systems Interconnection (OSI) protocol stack built upon the Transmission Control Protocol (TCP) and Internet Protocol (IP) in the transport and network layer, respectively, and upon Ethernet and/or RS-232C as physical media. For time-critical event-based messages, IEC 61850-8-1 specifies the Generic Object Oriented Substation Events (GOOSE) directly on the Ethernet link layer of the communication stack. For very fast periodically changing signals at the process level such as measured analogue voltages or currents IEC 61850-9-2 specifies the Sampled Value (SV) service, which like GOOSE builds directly on the Ethernet link layer. Hence, the standard defines a format to publish, as multicast messages on an industrial Ethernet, event-based messages and digitized measurement data from current or voltage sensors on the process level as a substitute to traditional copper wiring.

Accordingly, SV or other process data may be transmitted over an inter-bay process bus, making the transmitted information available to neighbouring bays. For cost effective setups such as in medium or low-voltage substations, the inter-bay process bus and the station bus can be merged into one single communication network. Assuming that information which is required for executing protection and control functionality is shared through a bus, emerging "digital substation" concepts open up new centralized Protection & Control possibilities. For instance, PC-like devices on a station level would not only serve as a gateway or HMI console, but would also host backup functionality for the bay IED devices, or execute station-wide protection schemes such as busbar protection.

The patent US 6'550'020 claims a data processing system with at least one Integrated Circuit IC containing a central processing unit that includes at least first and second processing cores. Each of the processing cores includes a full set of the components utilized by conventional single-core CPU to fetch, decode, and execute instructions and transfer information to and from other parts of the data processing system such as a global data storage or shared memory. The IC also includes input facilities that receive control input specifying which of the processing cores is to be utilized, e.g. to utilize the second core as a virtual first processing core upon determining that the first core is inactive or defective. To this end, the IC includes configuration logic that dynamically decodes the control input and, in response, selectively controls reception of input signals and transmission of output signals of one or more core of the processing cores in accordance with the control input.

In advanced computer technology, a virtualization layer provided between the physical hardware of a computing system and one or more guest operating systems running on that hardware supports distinct execution environments, or Virtual Machines VM, to which the guest operating systems are assigned. The guest systems are independent from each other, i.e. they do not know about the existence of the other guest systems. To that purpose, the virtualization layer virtualizes, or partitions, all physically available hardware resources required by the guest systems, e.g. CPU, memory storage devices, I/O devices such as network cards or adapters, printers, displays. A single guest operating system runs or executes on each virtual machine, and one or more applications in turn run on the guest operating system and behave as if they were running on their own dedicated real computer.

The patent US 7'299'468 discloses an automatic resource management for a virtual machine operating system comprising a multiplicity of virtual machines that are allocated a finite amount of resources, such as private virtual memory, real CPU and real I/O. The patent addresses time- or application dependent needs for each of the allocated resources. For instance, during some periods, the virtual machine may be executing applications requiring complex arithmetic computations which are CPU intensive and during other periods the virtual machine may be executing applications such as data backup applications which hardly use the CPU. Hence, if the one virtual machine needs additional resources, the one virtual machine is automatically cloned. The clone is allocated a share of the resources taken from the shares of other of the virtual machines, such that the resultant shares allocated to the one virtual machine and the clone together are greater than the share allocated to the one virtual machine before the one virtual machine was cloned.

The article "A new-style centralized IED based on IEC 61850" by Yi et al., Power and energy society general meeting - conversion and delivery of electrical energy in the 21st century, IEEE, 20 July 2008, pages 1-5, discusses a new centralized IED (NCIED) conforming to IEC 61850 standards. Each NCIED is abstracted as a logical device arranged on bay level and providing substation functions such as protection, control, supervision (or monitoring), and record.

The US patent application 2002/052914 discloses multiple instances of operating systems functioning cooperatively on a single multiprocessor computer (virtualization), and a dynamic assignment of hardware resources.

### DESCRIPTION OF THE INVENTION

It is an objective of the invention to simplify a structure of a Substation Automation (SA) system, to reduce the number of independent SA devices, and to save overall system costs related to hardware, engineering, and maintenance. These objectives are achieved by an SA device and an SA system according to the claims 1 and 7. Further preferred embodiments are evident from the dependent patent claims.

According to the invention, separate SA system-level functionalities or tasks, which are conventionally performed by a multitude of distinct station-level devices, are provided by a single SA device comprising a plurality of Processing Units (PU) on a single circuit board as main processing hardware. By means of virtualization techniques supporting multiple instances of Operating Systems (OS) on the plurality of PUs, distinct and mutually isolated execution environments are created. Each of these execution environments hosts a single functionality out of a Supervisory Control And Data Acquisition (SCADA) functionality, a gateway functionality, an engineering workplace functionality and a firewall functionality.

Preferably, the plurality of PUs is either a plurality of distinct Central Processing Units (CPUs), or physical chips, mounted on the same circuit board, or a plurality of processing cores of a single multi-core CPU sharing the same Random Access Memory (RAM), or a combination thereof.

The SA device comprises shared hardware resources or components, in particular volatile memory such as RAM, Input/Output (I/O) devices such as Hard Disk Drives HDD, communication interfaces to connect to printers and displays, and network interfaces to connect to an SA station bus. Virtualization techniques prevent, despite of the shared resources, mutual influence between the execution environments thus supporting the merging of the abovementioned station-level functions. Each execution environment, also called Virtual Machine (VM), runs a guest OS that in turn may support Symmetric Multi-Processing (SMP), i.e. the guest OS may handle several of the processing cores.

According to an advantageous embodiment, each execution environment runs the very same guest OS as the dedicated station-level device which conventionally performed the single functionality that is being merged to the SA device. For instance, the SCADA runs under "Windows embedded", the gateway functionality under "VxWorks", and the engineering tasks under "Windows". No modifications or adaptations to the original application set-up are required prior to performing the merged functionality by the SA device.

In a preferred variant of the invention, even protection and/or control functionality, either for centralized, station-wide schemes or on behalf of an individual substation bay, is also hosted by one of the execution environments. This set-up achieves backup functionality on behalf of dedicated protection & control Intelligent Electronic Devices (IEDs), or bay units, without adding hardware; the only prerequisite being that measurements and control commands are available to the SA device via the station/process bus. Substation configuration information can in this case advantageously be shared between the different protection and control applications. Protection and control functionality can be executed within one or several dedicated execution environments, as one process on one core, as two separate processes; or with every protection function allocated to a dedicated core. The latter corresponds to a level of granularity in the allocation, or isolation, of processes or functions to separate processing cores without precedent.

In a further preferred variant, the SA device is adapted to be used in SA systems with separate communication networks for process and station bus applications. This can be realized given the fact that SCADA, Engineering and the gateway applications are directly allocated to the corresponding Station Bus Network Interface Card (NIC), whereas the protection and control functions additionally utilize the process bus NIC in order to receive and send messages from and to the process bus.

In an advantageous embodiment of the invention, various levels of redundancy are achieved by duplicating, or even triplication of, the entire SA device including all shared resources, or of critical system components. The latter comprise at least the power supply and storage, duplication of which increases reliability on a SA device level. On the other hand, from an overall station perspective, the SA device itself may be installed in a redundant setup, assuming proper redundancy or switchover mechanisms such as hot-standby (OWS, gateway, control) or hot-hot (protection) between the redundant SA devices. Alternatively, reliability may be increased by means of software redundancy, with each of the functionalities being instantiated several times on the same SA device in separate execution environments, or by combined hardware and software redundancy. In addition, functionalities with no redundancy nowadays, such as a Human Machine Interface (HMI), can be doubled at no additional cost.

The maturing of the IEC 61850 standard allows for innovative architectural concepts in Substation Automation, and safe operation of substation bays can be achieved with different hardware setups. In order to counterbalance a possible decrease in reliability due to the increased number of components and devices, integration of functionality into fewer devices, but with the possibility of selective functionality or hardware redundancy, is herein proposed.

### BRIEF DESCRIPTION OF THE DRAWINGS

The subject matter of the invention will be explained in more detail in the following text with reference to preferred exemplary embodiments which are illustrated in the attached drawings, in which:
Fig.1 schematically shows a prior art substation;
Fig.2 is an architecture of an SA device with multiple processing units, and
Fig.3 depicts an excerpt of a substation with an SA device as above.

The reference symbols used in the drawings, and their meanings, are listed in summary form in the list of reference symbols. In principle, identical parts are provided with the same reference symbols in the figures.

### DETAILED DESCRIPTION OF PREFERRED EMBODIMENTS

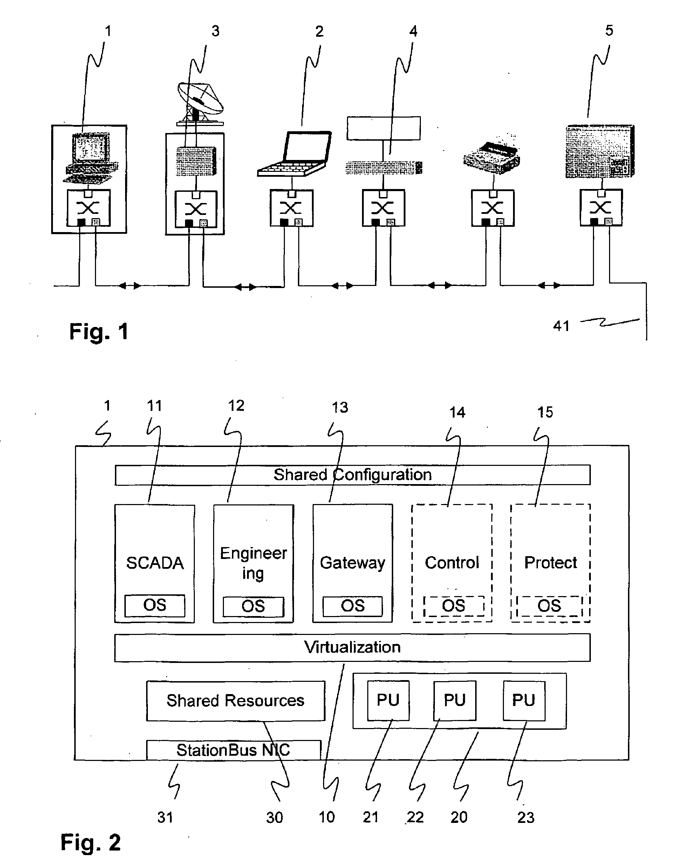

Fig.1 shows an excerpt of a prior art Substation Automation (SA) setup from the perspective of communication infrastructure and installed functionality. Each of the station-level functionalities is hosted on a separate and dedicated computing device: Supervision workstation, or Station PC, with SCADA functionality and a HMI 1, Engineering PC 2, Gateway device 3, firewall 4, and optional station computer or IED 5 for executing Protection and Control functionality. The devices are all connected, via appropriate switches, to a substation-wide station bus 41. Most of the devices are running different OS, such as Windows (HMI/Engineering), Windows embedded (Station computers), or VxWorks (gateways, IEDs).

Fig.2 shows an architecture of an SA device 1 with multiple Processing Units 21, 22, 23 mounted on a single circuit board (motherboard), or even being part of a single multi-core CPU 20, some shared resources 30 such as volatile memory, Flash memory, HardDiskDrive, and a shared Network Interface card 31. The SA Device comprises several execution environments or Virtual Machines 11-15, enabled and supported by a virtualization layer 10 on top of the processing hardware. The different execution environments host the functions and applications to be executed, by providing or emulating the full hardware chain of an independent PC. To that purpose, the virtualization layer controls access to the shared hardware resources (HDD, NIC) and to the Processing Units 21, 22, 23. The different execution environments run different Operating Systems (OS) which in turn execute the different station-level functionality such as SCADA 11, Engineering 12, Gateway 13, and optionally Control 14 and Protection 15 applications. When reverting to the original OS, the set-up of the functions and applications is substantially unchanged as compared to their conventional implementation on distinct devices, in particular, no modifications to the software code are required.

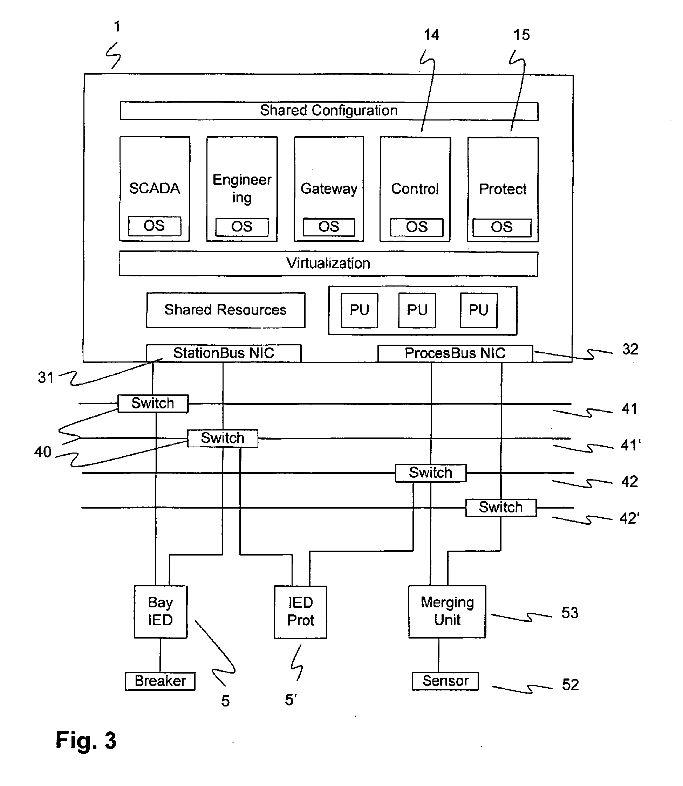

Fig.3 depicts an excerpt of a Substation Automation system with an SA device 1 hosting all relevant SA functionalities collapsed into a single system. The station bus network interface 31 connects via switches 40 to a redundant station bus 41, 41' for exchanging actuator commands, alarms and events with IEDs 5, 5' of the substation. As the SA device itself also hosts (backup) protection functionality 15, it is equipped with a process bus interface 32 which connects via switches to a redundant process bus 42, 42'. Sensors 52 such as CT/VT sensors are located in respective bays and provide their measurements or other operational data, e.g. via IED 5' or Merging Unit 53, to the process bus 42, 42'. Other combinations of sensors connected to IED devices and/or the process bus, as well as other redundancy schemes for protection and control are clearly possible.

### LIST OF DESIGNATIONS

- 1: SA Device
- 2: Engineering PC
- 3: Gateway
- 4: Firewall
- 5: IED
- 10: virtualization layer
- 11-15: execution environments
- 20: mulit-core CPU
- 21, 22, 23: Processing Units
- 30: shared resource
- 31, 32: Network Interface Card
- 40: network switch
- 41: station bus
- 42: process bus
- 52: sensor
- 53: Merging Unit

## Claims

1. A Substation Automation SA device (1) adapted to be connected to a station bus (41) of a substation of an electric power transmission or distribution system and having multiple Processing Units PU (21, 22, 23) on a single board as main processing hardware on which a first and a second execution environment (11-12) is created by means of virtualization techniques (10), wherein a first and a second functionality is assigned to the first and to the second execution environment (11-12), respectively,
**characterized in that** the first and the second functionality are system-level substation functionalities from a set comprising Supervisory Control And Data Acquisition SCADA, gateway, engineering and firewall functionalities.

2. The SA device according to claim 1, **characterized in that** each of the multiple PUs (21, 22, 23) is either an individual Central Processing Unit (CPU), or an individual processing core of a multi-core CPU (20).

3. The SA device according to claim 1, **characterized in that** the distinct execution environments (11-15) run different Operating Systems.

4. The SA device according to claim 1, **characterized in that** a third execution environment (15) handles substation protection functionality.

5. The SA device according to claim 4, **characterized in that** it comprises two network interfaces (31, 32) for connecting to the station bus (41) and a process bus (42).

6. The SA device according to claim 1, wherein the execution environments (11-15) share hardware resources (30, 31, 32), **characterized in that** some of the shared resources (30, 31, 32) are duplicated.

7. A Substation Automation SA system for operating a substation of an electric power transmission or distribution system, comprising a number of Intelligent Electronic Devices IEDs (5, 5') for protecting and controlling the substation, an SA device (1) as claimed in one of the preceding claims, and a substation-wide station bus (41) interconnecting the IEDs and the SA device.

8. The SA system according to claim 7, **characterized in that** it comprises a number of sensors (52) for measuring process values, an SA device (1) as claimed in claim 4 or 5, and a process bus (42) interconnecting the sensors and the SA device.

## Patentansprüche

1. Schaltanlagenautomatisierungs- bzw. SA-Vorrichtung (1), die dafür ausgelegt ist, mit einem Anlagenbus (41) einer Schaltanlage eines elektrischen Stromübertragungs- oder -verteilungssystems verbunden zu werden und mehrere Verarbeitungseinheiten PU (21, 22, 23) auf einer einzigen Platine als Hauptverarbeitungshardware aufweist, worauf eine erste und eine zweite Ausführungsumgebung (11-12) mittels Virtualisierungstechniken (10) erzeugt werden, wobei eine erste und eine zweite Funktionalität der ersten bzw. der zweiten Ausführungsumgebung (11-12) zugewiesen werden,
**dadurch gekennzeichnet, dass** die erste und die zweite Funktionalität Schaltanlagenfunktionalitäten auf Systemebene aus einer Menge sind, die Gateway-, technische und Firewall-Funktionalitäten der Supervisory Control And Data Acquisition SCADA umfasst.

2. SA-Vorrichtung nach Anspruch 1, **dadurch gekennzeichnet, dass** jede der mehreren PU (21, 22, 23) entweder eine einzelne Zentralverarbeitungseinheit (CPU) oder ein einzelner Verarbeitungskern einer Mehrkern-CPU (20) ist.

3. SA-Vorrichtung nach Anspruch 1, **dadurch gekennzeichnet, dass** die verschiedenen Ausführungsumgebungen (11-15) verschiedene Betriebssysteme ausführen.

4. SA-Vorrichtung nach Anspruch 1, **dadurch gekennzeichnet, dass** eine dritte Ausführungsumgebung (15) Schaltanlagenschutzfunktionalität handhabt.

5. SA-Vorrichtung nach Anspruch 4, **dadurch gekennzeichnet, dass** sie zwei Netzwerkschnittstellen (31, 32) zur Verbindung mit dem Anlagenbus (41) und einem Prozessbus (42) umfasst.

6. SA-Vorrichtung nach Anspruch 1, wobei sich die Ausführungsumgebungen (11-15) Hardwarebetriebsmittel (30, 31, 32) teilen, **dadurch gekennzeichnet, dass** bestimmte der geteilten Betriebsmittel (30, 31, 32) dupliziert sind.

7. Schaltanlagenautomatisierungs- bzw. SA-System zum Betrieb einer Schaltanlage eines elektrischen Stromübertragungs- oder -verteilungssystems, das eine Anzahl von Intelligent Electronic Devices IED (5, 5') zum Schützen und Steuern der Schaltanlage, eine SA-Vorrichtung (1) nach einem der vorhergehenden Ansprüche und einen die IED und die SA-Vorrichtung verbindenden schaltanlagenweiten Anlagenbus (41) umfasst.

8. SA-System nach Anspruch 7, **dadurch gekennzeichnet, dass** es eine Anzahl von Sensoren (52) zum Messen von Prozesswerten, eine SA-Vorrichtung (1) nach Anspruch 4 oder 5 und einen die Sensoren und die SA-Vorrichtung verbindenden Prozessbus (42) umfasst.

## Revendications

1. Dispositif d'automatisation de sous-station SA (1), conçu pour être connecté à un bus de station (41) d'une sous-station d'un système de transmission ou de distribution d'énergie électrique et possédant une pluralité d'unités de traitement PU (21, 22, 23) sur une seule carte servant de matériel de traitement principal sur laquelle sont créés des premier et deuxième environnements d'exécution (11-12) au moyen de techniques de virtualisation (10), des première et deuxième fonctionnalités étant respectivement attribuées aux premier et deuxième environnements d'exécution (11-12),
**caractérisé en ce que** les première et deuxième fonctionnalités sont des fonctionnalités de sous-station au niveau système parmi un groupe comprenant des fonctionnalités d'acquisition et de contrôle des données SCADA, de passerelle, d'ingénierie et de pare-feu.

2. Dispositif SA selon la revendication 1, **caractérisé en ce que** chacune de la pluralité de PU (21, 22, 23) est soit une unité centrale de traitement (CPU) individuelle, soit un coeur de traitement individuel d'une CPU multicoeur (20).

3. Dispositif SA selon la revendication 1, **caractérisé en ce que** les environnements d'exécution distincts (11-15) exécutent des systèmes d'exploitation différents.

4. Dispositif SA selon la revendication 1, **caractérisé en ce qu'**un troisième environnement d'exécution (15) gère une fonctionnalité de protection de sous-station.

5. Dispositif SA selon la revendication 4, **caractérisé en ce qu'**il comprend deux interfaces de réseau (31, 32) permettant la connexion au bus de station (41) et à un bus de processus (42).

6. Dispositif SA selon la revendication 1, dans lequel les environnements d'exécution (11-15) partagent des ressources matérielles (30, 31, 32), **caractérisé en ce que** certaines des ressources partagées (30, 31, 32) sont dupliquées.

7. Système d'automatisation de sous-station SA pour exploiter une sous-station d'un système de transmission ou de distribution d'énergie électrique, comprenant un certain nombre de dispositifs électroniques intelligents IED (5, 5') pour protéger et piloter la sous-station, un dispositif SA (1) selon l'une des revendications précédentes, et un bus de station (41) à l'échelle de la sous-station et interconnectant les IED et le dispositif SA.

8. Système SA selon la revendication 7, **caractérisé en ce qu'**il comprend un certain nombre de capteurs (52) pour mesurer des valeurs de processus, un dispositif SA (1) selon la revendication 4 ou 5 et un bus de processus (42) interconnectant les capteurs et le dispositif SA.
